# EUROPEAN PATENT APPLICATION

(11) **EP 3 540 491 A1**
(43) Date of publication of application: **18.09.2019**
(21) Application number: 17869436.0
(22) Date of filing: 06.11.2017
(51) Int. Cl.: G02B 7/182, B60K 35/00, G02B 27/01, B60R 1/02

(54) **MIRROR UNIT**

(30) Priority: 09.11.2016 JP 2016218772
(71) Applicant: Nippon Seiki Co., Ltd., Nagaoka-shi, Niigata 940-8580 (JP)
(72) Inventor: TAKAHASHI, Shinnosuke, Nagaoka-shi, Niigata 940-8580 (JP); YAMAYA, Shuichi, Nagaoka-shi, Niigata 940-8580 (JP); SATO, Genichiro, Nagaoka-shi, Niigata 940-8580 (JP)
(74) Representative: Jackson, Richard Eric
(86) International application number: PCT/JP2017/039946
(87) International publication number: WO 2018/088361

(57) **Abstract**

The present invention enables provision of a mirror unit in which a mirror is strongly adhered to a holder. A mirror unit 30 according to one embodiment of the present invention is provided with: a mirror 31 that comprises a mirror surface 31a for reflecting light; and a holder 35 that holds the mirror 31 in a state of being adhered to the mirror 31, wherein adhesion surfaces 37a-37e of the holder 35 to be adhered to the mirror 31 have uneven grooves 370. Since this configuration increases the surface area of the adhesion surfaces 37a-37e, the holder 35 can be firmly adhered to the mirror 31, and thereby the risk of the mirror 31 falling off the holder 35 is decreased.

## Description

### TECHNICAL FIELD

The present invention relates to a mirror unit.

### BACKGROUND ART

In the field of optical devices such as head-up displays, there are conventionally known mirror units that reflect light. As disclosed in, for example, Patent Literature 1, a mirror unit includes: a concave mirror that reflects and enlarges display light; and a holder that supports the concave mirror. The concave mirror is attached to the holder with a two-sided adhesive tape.

### PRIOR ART DOCUMENT

### PATENT DOCUMENT

Patent Literature 1: Japanese Laid-open Patent Publication No. 2002-277814

### SUMMARY OF THE INVENTION

### PROBLEMS TO BE SOLVED BY THE INVENTION

With the configuration disclosed in the above-described Patent Literature 1, when a mirror unit is placed in a high temperature environment, there is a possibility that the concave mirror and the holder expand and the mirror is separated from the holder.

The present invention has been made in consideration of the above-described actual circumstance, and it has an object to provide a mirror unit in which a mirror is fixedly attached to the holder.

### SOLUTION TO PROBLEM

To achieve the above object, a mirror unit according to a first aspect of the present invention includes: a mirror including a mirror surface configured to reflect light; and a holder configured to support the mirror, the holder adhering to the mirror, wherein an adhesion surface of the holder adhering to the mirror includes an uneven groove.

### EFFECT OF THE INVENTION

According to the present invention, it is possible to provide a mirror unit in which a mirror is fixedly attached to a holder.

### BRIEF DESCRIPTION OF THE DRAWINGS

Fig. 1 is a schematic diagram of a vehicle having a display device according to an embodiment of the present invention installed therein.
Fig. 2 is a schematic view that illustrates the configuration of the display device according to an embodiment of the present invention.
Fig. 3 is a perspective exploded view of a mirror unit according to an embodiment of the present invention.
Fig. 4 is a perspective exploded view of the mirror unit according to an embodiment of the present invention.
Fig. 5(a) is a plan view of the mirror unit according to an embodiment of the present invention, and Fig. 5(b) is a front view of the mirror unit.
Fig. 6 is a front view of a concave mirror according to an embodiment of the present invention.
Fig. 7 is a front view of a holder according to an embodiment of the present invention.
Fig. 8 is a perspective enlarged view of a first positioning recessed portion of the holder according to an embodiment of the present invention.
Fig. 9(a) is a perspective enlarged view of a second positioning recessed portion of the holder according to an embodiment of the present invention, and Fig. 9(b) is a perspective enlarged view of a third positioning recessed portion of the holder.
Fig. 10(a) is a cross-sectional view taken along the line A-A of Fig. 5(b) according to an embodiment of the present invention, Fig. 10(b) is a cross-sectional view taken along the line B-B of Fig. 5(b), and Fig. 10(c) is a partially enlarged view of Fig. 10(a).
Fig.11 is a back view of the mirror unit according to an embodiment of the present invention.
Fig. 12(a) is a cross-sectional view taken along the line G-G of Fig. 11 according to an embodiment of the present invention, Fig. 12(b) is a cross-sectional view taken along the line F-F of Fig. 11, and Fig. 12(c) is a cross-sectional view taken along the line H-H of Fig. 11.
Fig. 13 is a perspective enlarged view of a motor and a converting mechanism according to an embodiment of the present invention.
Fig. 14 is a perspective enlarged view of a first adhesion surface 37a of the holder according to an embodiment of the present invention.
Fig.15 is a top enlarged view of the first adhesion surface 37a of the holder according to an embodiment of the present invention.
Fig. 16 is a cross-sectional view of the first adhesion surface 37a of the holder according to an embodiment of the present invention; Fig. 16(a) is a cross-sectional view taken along the line I-I of Fig. 15, and Fig. 16(b) is a cross-sectional view taken along the line J-J of Fig. 15.

### MODE FOR CARRYING OUT THE INVENTION

With reference to the drawings, an embodiment of a display device including a mirror unit according to the present invention is explained.

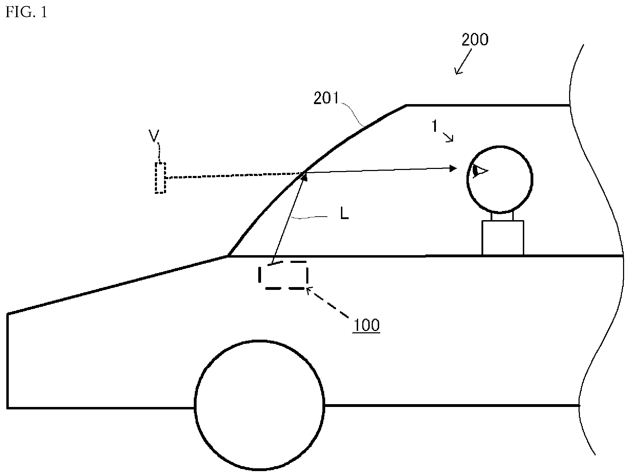

As illustrated in Fig. 1, a display device 100 according to the present embodiment is placed in for example the dashboard of a vehicle 200. The display device 100 is configured as what is called a head-up display device that outputs display light L representing an image to a front windshield 201 (an example of a projecting member) of the vehicle 200 and displays a virtual image V of the image with the display light L reflected by the front windshield 201. The display of the virtual image V causes a viewer 1 (principally, the driver of the vehicle 200) to view the image displayed in a far distance from the front windshield 201.

### (Configuration of the display device)

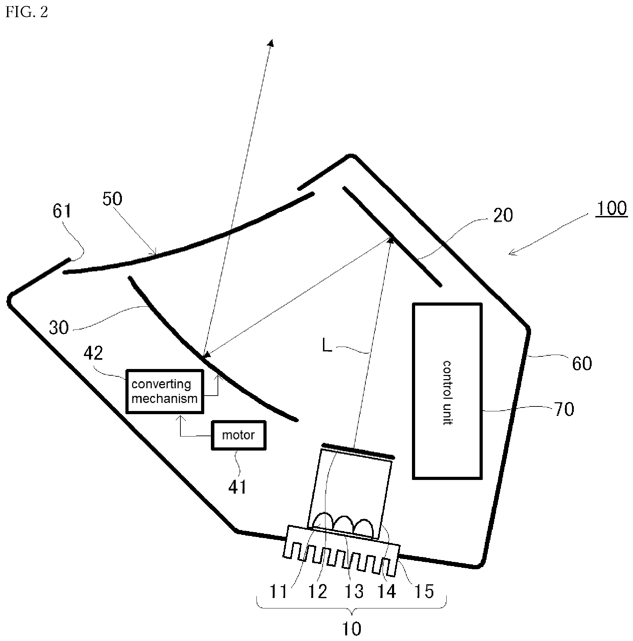

As illustrated in Fig. 2, the display device 100 includes a display unit 10, a reflective mirror member 20, a mirror unit 30, a motor 41, a converting mechanism 42, a chassis 60, and a control unit 70.

The chassis 60 is formed of a non-translucent resin material or metallic material and is hollow with substantially a cuboidal shape. The chassis 60 is provided with an opening 61 at the position opposed to the front windshield 201. The chassis 60 includes a curved plate-like window portion 50 covering the opening 61. The window portion 50 is made of a translucent resin material such as acrylic, through which the display light L passes. The chassis 60 houses each component of the display device 100.

The display unit 10 outputs the display light L representing a predetermined image and, specifically, it includes a light source 11, a liquid crystal display panel 12, a light source board 13, a diffusion chassis 14, and a heatsink 15.

The light source 11 is composed of a plurality of LEDs (light emitting diodes). For example, the light source 11 is installed on the light source board 13 that is made of an aluminum substrate and has various types of wiring printed thereon. The light source 11 outputs light for illuminating the liquid crystal display panel 12. The light source 11 is electrically connected to the control unit 70 via the light source board 13, and it emits light under the control of the control unit 70. The diffusion chassis 14 is formed of resin, such as polycarbonate, in white. The diffusion chassis 14 is disposed between the light source 11 and the liquid crystal display panel 12, and it diffuses light from the light source 11 and uniformly illuminates the liquid crystal display panel 12. The liquid crystal display panel 12 switches each pixel between a transmissive/non-transmissive state under the control of the control unit 70 so that it receives light from the light source 11 and outputs the display light L representing a predetermined image (an image representing vehicle information, and the like). The heatsink 15 is formed of a metal such as aluminum, and it releases heat generated by the light source 11.

As illustrated in Fig. 2, the reflective mirror member 20 reflects the display light L, output from the display unit 10, toward the mirror unit 30. For example, the reflective mirror member 20 is formed by applying vacuum vapor deposition of aluminum to molded polycarbonate resin.

The mirror unit 30 reflects the display light L, output from the display unit 10 and reflected by the reflective mirror member 20, by enlarging it toward the front windshield 201. The specific configuration of the mirror unit 30 is described later in detail.

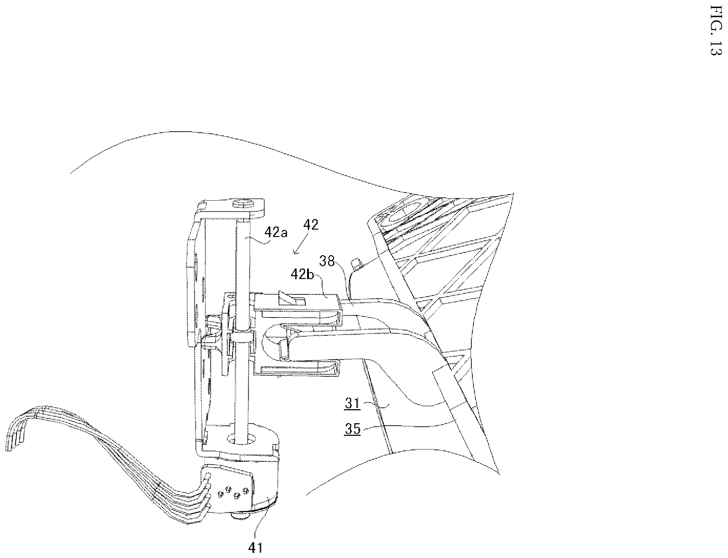

The motor 41 is secured to the inside of the chassis 60, and it is driven under the control of the control unit 70. The converting mechanism 42 is a mechanism that converts the rotary movement of the motor 41 into linear movement and, specifically, as illustrated in Fig. 13, it includes: a threaded shaft 42a whose outer circumference is threaded; and a movable portion 42b, part of which is engaged with the outer circumference of the threaded shaft 42a. The movable portion 42b supports part of the mirror unit 30 (a support portion 38 described later). The movable portion 42b moves along the threaded shaft 42a due to the axial rotation of the threaded shaft 42a in accordance with driving of the motor 41.

### (Configuration of the mirror unit)

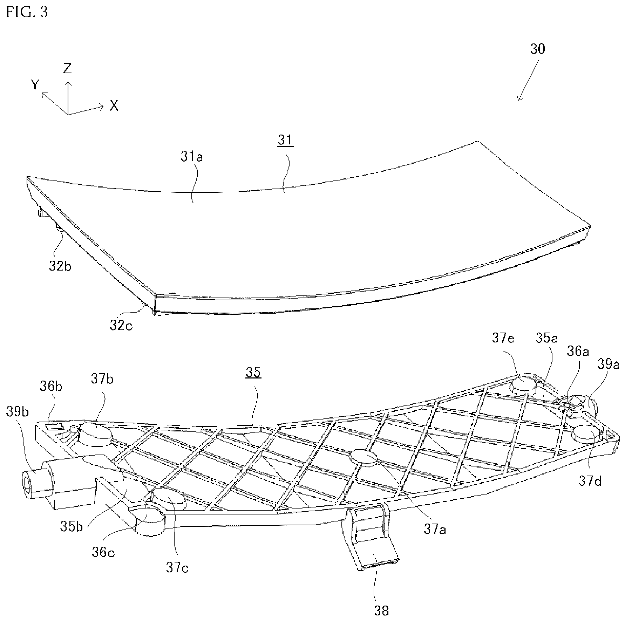

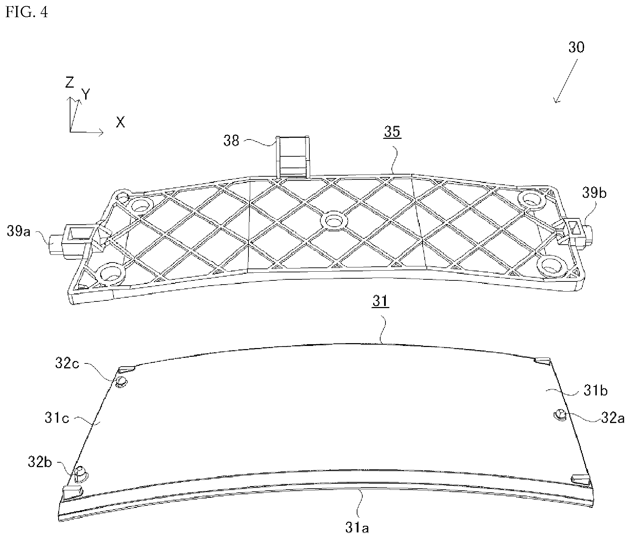

As illustrated in Fig. 3 and Fig. 4, the mirror unit 30 includes: a concave mirror 31 that is an example of a mirror that reflects the display light L; and a holder 35 that supports the concave mirror 31.

The concave mirror 31 is formed in a plate-like shape that is substantially rectangular, and it is curved in its longitudinal direction. Specifically, the concave mirror 31 includes: a base made of a synthetic resin including a concave curved surface having a predetermined curvature; and a mirror surface 31a made of a metal, such as aluminum, deposited on the curved surface of the base. The base of the concave mirror 31 may be formed of a synthetic resin, for example, cyclo olefin polymer (COP) resin, to form the curved surface of the mirror surface 31a with high accuracy. Furthermore, the base of the concave mirror 31 may be formed of not only synthetic resin but also glass.

According to the present embodiment, in the XY-plane coordinates along the mirror surface 31a, the X direction corresponds to the longitudinal direction of the concave mirror 31, and the Y direction perpendicular to the X direction corresponds to the lateral direction of the concave mirror 31. Furthermore, the Z direction perpendicular to the XY plane corresponds to the thickness direction of the concave mirror 31.

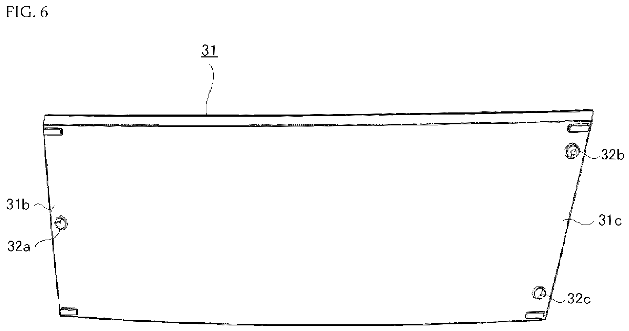

As illustrated in Fig. 4 and Fig. 6, the concave mirror 31 includes first to third positioning protruding portions 32a to 32c that are formed to protrude from the back surface (the surface opposed to the holder 35). The first to the third positioning protruding portions 32a to 32c are examples of first to third mirror-side positioning portions. Each of the positioning protruding portions 32a to 32c is formed to have a cylindrical shape with a spherical end protruding in a direction away from the mirror surface 31a of the concave mirror 31. As illustrated in Fig. 4, the second positioning protruding portion 32b is formed to be higher than the first positioning protruding portion 32a and the third positioning protruding portion 32c in the Z direction. The first positioning protruding portion 32a is formed at a first end 31b in the longitudinal direction (the X direction) of the concave mirror 31. The first positioning protruding portion 32a is located at the center in the lateral direction (the Y direction) of the concave mirror 31. The second positioning protruding portion 32b and the third positioning protruding portion 32c are formed at a second end 31c on the opposite side of the first end 31b in the longitudinal direction of the concave mirror 31. The second positioning protruding portion 32b is positioned at one of the corners at the side of the second end 31 c on the back surface of the concave mirror 31, and the third positioning protruding portion 32c is positioned at the other one of the corners at the side of the second end 31c on the back surface of the concave mirror 31. Specifically, the distance from the first positioning protruding portion 32a to the second positioning protruding portion 32b and the distance from the first positioning protruding portion 32a to the third positioning protruding portion 32c are set to be equivalent and large as much as possible.

In the same manner as the concave mirror 31, the holder 35 is formed in a plate-like shape that is substantially rectangular, and it is curved in the longitudinal direction. The holder 35 is formed by using a synthetic resin, for example, a polymer alloy of polycarbonate (PC) and polyethylene terephthalate (PET). Furthermore, the holder 35 may be formed by mixing the PC/PET polymer alloy with for example glass fiber by approximately 10% to increase its rigidity.

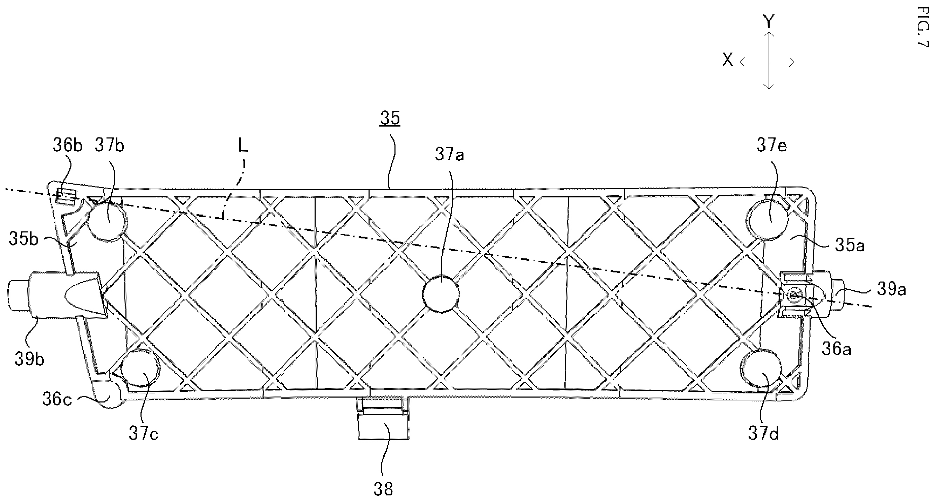

As illustrated in Fig. 3 and Fig. 7, the holder 35 includes first to third positioning recessed portions 36a to 36c that are formed to be recessed on the front surface (the surface opposed to the back surface of the concave mirror 31). The first to the third positioning recessed portions 36a to 36c are examples of first to third holder-side positioning portions. The first positioning recessed portion 36a of the holder 35 is located at the position corresponding to the first positioning protruding portion 32a of the concave mirror 31, the second positioning recessed portion 36b of the holder 35 is located at the position corresponding to the second positioning protruding portion 32b of the concave mirror 31, and the third positioning recessed portion 36c of the holder 35 is located at the position corresponding to the third positioning protruding portion 32c of the concave mirror 31.

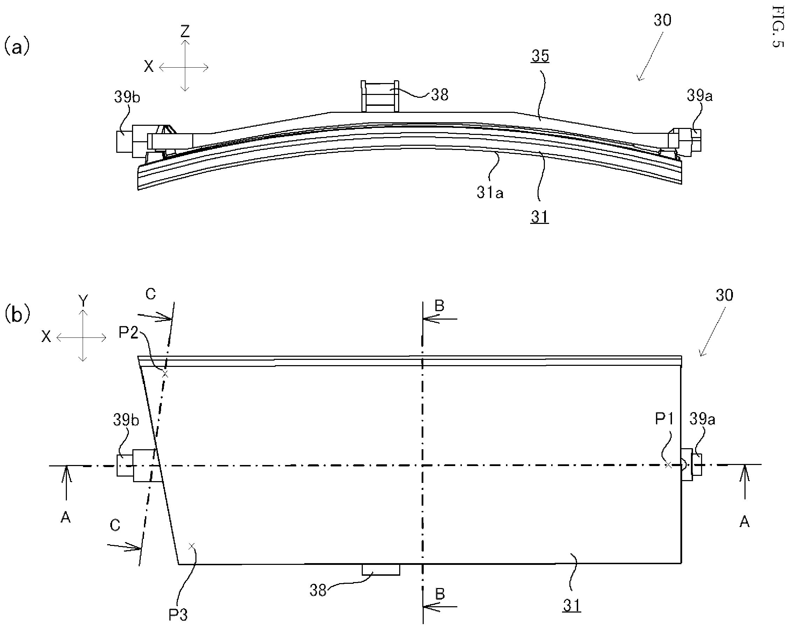

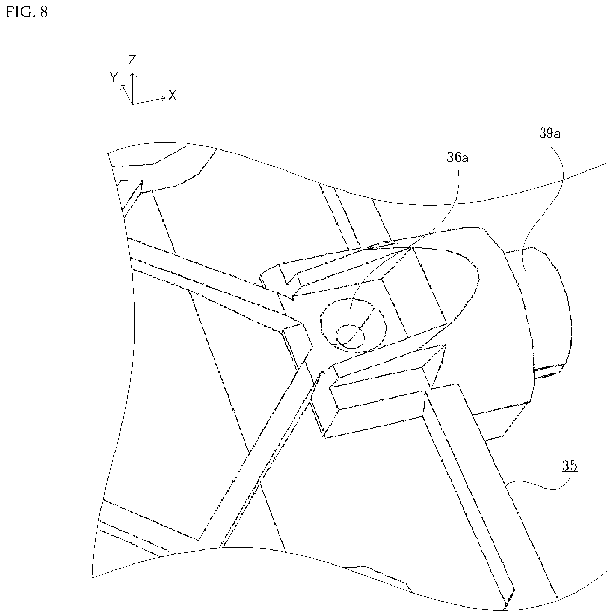

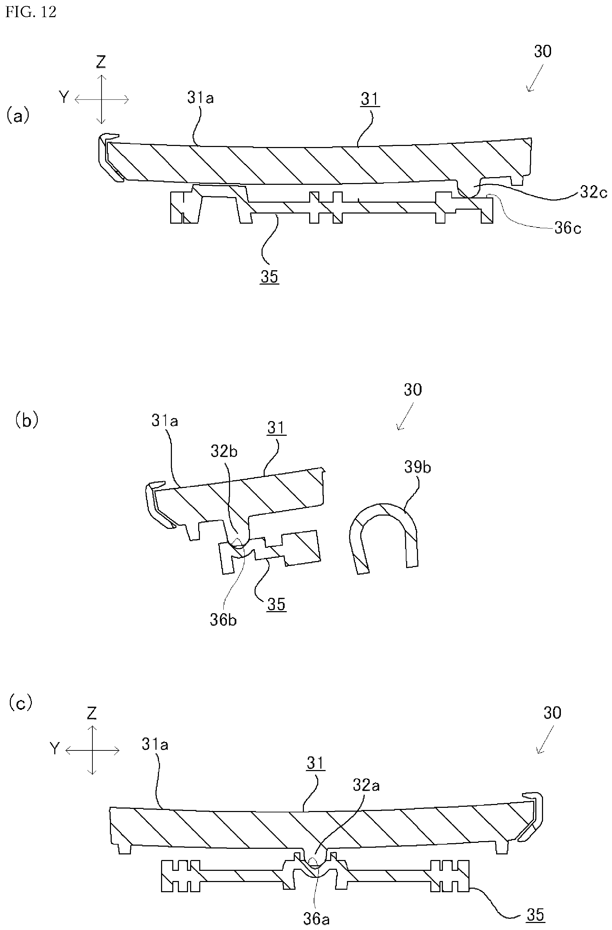

Specifically, the first positioning recessed portion 36a of the holder 35 is formed at a first end 35a in the longitudinal direction of the holder 35. The first positioning recessed portion 36a is located at the center in the lateral direction of the concave mirror 31. As illustrated in Fig. 8 and Fig. 12(c), the first positioning recessed portion 36a has a conical shape with a spherical end. The first positioning recessed portion 36a is formed to have the same size as that of the end portion of the first positioning protruding portion 32a. The end portion of the first positioning protruding portion 32a is in contact with the first positioning recessed portion 36a so that, at a first contact position P1 (see Fig. 5(b)), the concave mirror 31 is positioned relative to the holder 35 in the X direction, the Y direction, and the Z direction.

As illustrated in Fig. 3 and Fig. 7, the second positioning recessed portion 36b and the third positioning recessed portion 36c are formed at a second end 35b on the opposite side of the first end 35a in the longitudinal direction of the holder 35. The second positioning recessed portion 36b is located on one of the corners at the side of the second end 35b on the front surface of the holder 35, and the third positioning recessed portion 36c is located on the other one of the corners at the side of the second end 35b on the front surface of the holder 35.

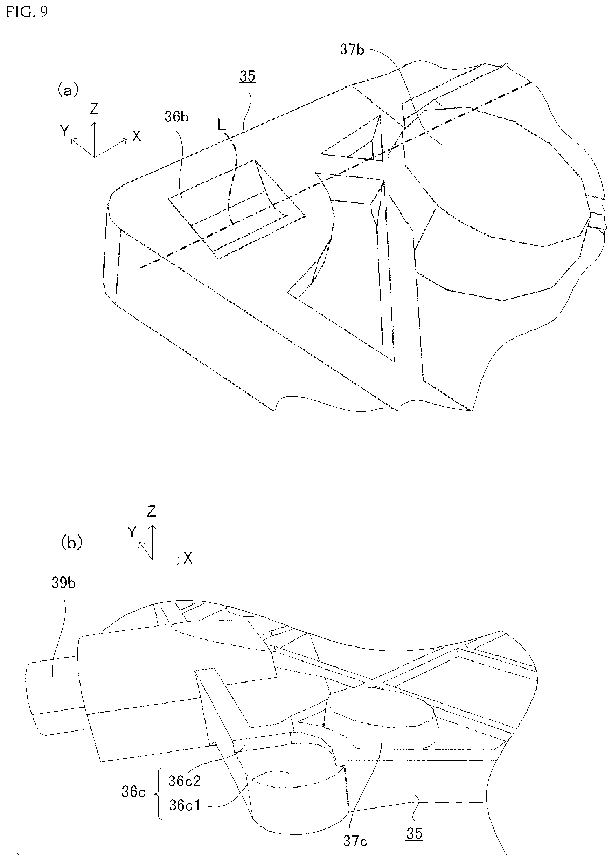

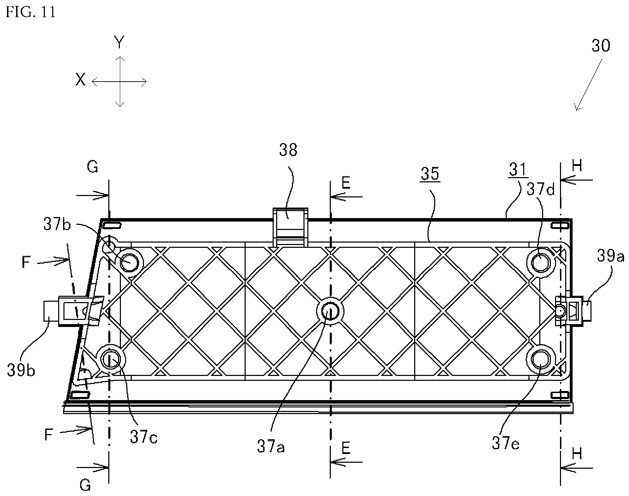

As illustrated in Fig. 7 and Fig. 9, the second positioning recessed portion 36b of the holder 35 is formed in substantially a V shape extending along a virtual connection line L connecting the second positioning recessed portion 36b and the first positioning recessed portion 36a when viewed from the front surface of the holder 35. The connection line L extends in a direction along the X direction such that, specifically, the angle made between the connection line L and the X direction is smaller than the angle made between the connection line L and the Y direction. The length of the second positioning recessed portion 36b in a direction along the connection line L is set such that, regardless of a shape error (particularly, a shape error in the X direction) of the holder 35, the second positioning protruding portion 32b is located within the second positioning recessed portion 36b. As illustrated in Fig. 12(b) that is a cross-sectional view along the line F-F in Fig. 11, the second positioning recessed portion 36b is configured such that a pair of inner surfaces opposed to each other in the direction (a direction along the Y direction) perpendicular to the connection line L abuts the second positioning protruding portion 32b. As the end portion of the second positioning protruding portion 32b abuts the second positioning recessed portion 36b, the concave mirror 31 is positioned relative to the holder 35 in the Y direction and the Z direction at a second contact position P2 (see Fig. 5(b)). As positioned at the first and the second contact positions P1, P2, the concave mirror 31 is prevented from rotating relative to the holder 35 on the XY plane with the first contact position P1 as a rotation center and from rotating toward the holder 35 on the YZ plane. Furthermore, as described above, as the second positioning recessed portion 36b extends in substantially the X direction, the concave mirror 31 is not secured in position relative to the holder 35 in the X direction at the second contact position P2.

As illustrated in an enlarged manner in Fig. 9(b), the third positioning recessed portion 36c of the holder 35 includes: a bottom surface 36c1 that is an example of a contact surface extending along the XY plane; and a side surface 36c2 formed in substantially a J shape. The side surface 36c2 extends from the edge surface extending in the lateral direction of the holder 35 to the edge surface extending in the longitudinal direction of the holder 35. The third positioning recessed portion 36c is opened from the side surface of the holder 35 toward an external space. The size of the bottom surface 36c1 is set such that, regardless of a shape error of the holder 35 in the X direction and the Y direction, the third positioning protruding portion 32c is positioned on the bottom surface 36c1. As illustrated in Fig. 12(a), as the end portion of the third positioning protruding portion 32c abuts the bottom surface 36c1 of the third positioning recessed portion 36c, the concave mirror 31 is positioned relative to the holder 35 in the Z direction at a third contact position P3 (see Fig. 5(b)). As positioned at the first to the third contact positions P1, P2, P3, the concave mirror 31 is prevented from rotating relative to the holder 35 in the Z direction toward the holder 35 around the line segment (not illustrated) connecting the first contact position P1 and the second contact position P2. As the third positioning protruding portion 32c is not in contact with the side surface 36c2, the concave mirror 31 is not secured in position in the X direction and the Y direction at the third contact position P3.

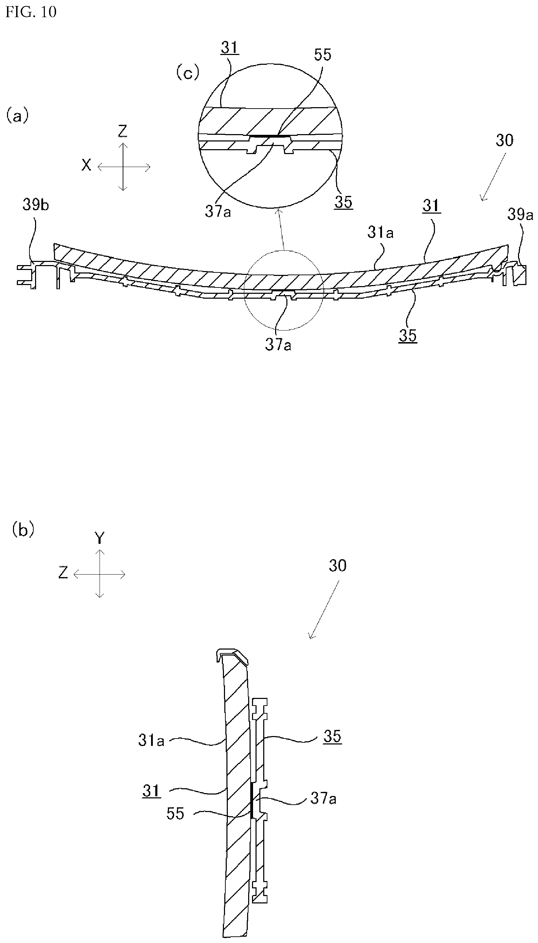

As illustrated in Fig. 7 and Fig. 11, the holder 35 is further provided with, on its front surface, first to fifth adhesion surfaces 37a to 37e having a circular shape. The first adhesion surface 37a is positioned at the center of the front surface of the holder 35, and the second to the fifth adhesion surfaces 37b to 37e are positioned at corners on the front surface of the holder 35. The second adhesion surface 37b is positioned near the second positioning recessed portion 36b and between the second positioning recessed portion 36b and the first adhesion surface 37a. The third adhesion surface 37c is positioned near the third positioning recessed portion 36c and between the third positioning recessed portion 36c and the first adhesion surface 37a. The fourth adhesion surface 37d is positioned on one of the corners at the side of the first end 35a on the front surface of the holder 35, and the fifth adhesion surface 37d is positioned on the other one of the corners at the side of the first end 35a on the front surface of the holder 35. When the concave mirror 31 is assembled with the holder 35, each of the adhesion surfaces 37a to 37e is opposed to the back surface of the concave mirror 31 with a certain clearance in the thickness direction of the holder 35. Although Fig. 10(c) illustrates only the clearance between the first adhesion surface 37a and the back surface of the concave mirror 31, a clearance is provided between the second to the fifth adhesion surfaces 37b to 37e and the back surface of the concave mirror 31 in the same manner. The upper surface of each of the adhesion surfaces 37a to 37e, opposed to the back surface of the concave mirror 31, is equivalent to an adhesive surface. As illustrated in Fig. 10(a) to (c), the gap between the first adhesion surface 37a and the back surface of the concave mirror 31 is filled with an adhesive agent 55. The gap between the second to the fifth adhesion surfaces 37b to 37e and the back surface of the concave mirror 31 is also filled with the adhesive agent 55. The adhesive force of the adhesive agent 55 causes the holder 35 and the concave mirror 31 to adhere to each other. For example, a solid adhesive of a thermoreversible resin component may be used as an adhesive agent. An adhesive agent is optionally selected depending on the material of each of the base of the concave mirror 31 and the holder 35 that are the targets to be adhered. Specifically, when the base of the concave mirror 31 is formed of COP and the holder 35 is formed of PC/PET, for example, the concave mirror 31 and the holder 35 may be glued by using an adhesive agent obtained by giving a reactive property to a hot-melt adhesive having urethane resin as the principal component, what is called a moisture-hardened reactive hot-melt adhesive (Jet-weld).

Furthermore, as illustrated in Fig. 3, first and second cylindrical rotary shaft portions 39a, 39b extending in the longitudinal direction are formed on both side surfaces, extending in the lateral direction, of the holder 35. The first rotary shaft portion 39a is provided at the position corresponding to the first positioning recessed portion 36a, and the second rotary shaft portion 39b is provided in the middle between the second positioning recessed portion 36b and the third positioning recessed portion 36c. The holder 35 is rotatably supported by the chassis 60 through the first and the second rotary shaft portions 39a, 39b.

Furthermore, as illustrated in Fig. 3, the support portion 38 having substantially an L shape is formed on one of the side surfaces, extending in the longitudinal direction, of the holder 35 at the side of the third positioning recessed portion 36c. As illustrated in Fig. 13, the support portion 38 is positioned in the center in the longitudinal direction of the holder 35 and is engaged with the movable portion 42b of the converting mechanism 42. When the movable portion 42b moves along the threaded shaft 42a, the movable portion 42b applies a rotative force to the support portion 38 and then the holder 35. This allows the holder 35 to rotate around the first and the second rotary shaft portions 39a, 39b. Rotation of the holder 35 changes the incident angle of the display light L relative to the mirror surface 31a of the mirror unit 30, changes the optical path of the display light L after being reflected by the mirror unit 30, and changes the display position of the virtual image V in the Z direction.

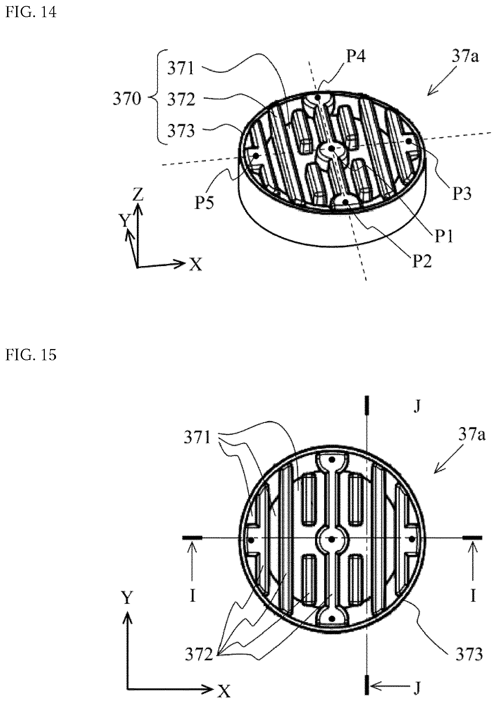

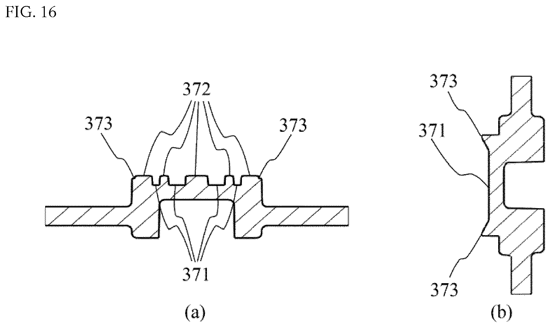

Furthermore, the first to the fifth circular adhesion surfaces 37a to 37e of the holder 35 are provided with uneven grooves 370. The configuration of the uneven groove 370 is explained by using the first adhesion surface 37a illustrated in Fig. 14, Fig. 15, and Fig. 16.

The first adhesion surface 37a is provided with the uneven groove 370 extending in the lateral direction (the Y direction) perpendicular to the longitudinal direction (the X direction) of the holder 35.

The uneven groove 370 is composed of a recessed portion 371, a protruding portion 372, and a frame portion 373 surrounding the recessed portion 371 and the protruding portion 372.

The recessed portion 371 has a recessed shape like a depression. The recessed portion 371 surrounded by the frame portion 373 serves as a container that contains an adhesive agent before being hardened.

The protruding portion 372 is shaped like a protrusion extending in the lateral direction (the Y direction) perpendicular to the longitudinal direction (the X direction) of the holder 35. The uneven form of the recessed portion 371 and the protruding portion 372 increases the size of the front surface of the adhesion surface 37a and enhances the adhesive force. Furthermore, the uneven form of the recessed portion 371 and the protruding portion 372 extending in the lateral direction (the Y direction) perpendicular to the longitudinal direction (the X direction) of the holder 35 improves the power of endurance against shear stress applied to the first adhesion surface 37a when the holder 35 and the concave mirror 31 adhering to the holder 35 are placed in a high temperature environment and reduces the possibility that the concave mirror 31 is separated from the holder 35.

Furthermore, at predetermined areas including an intersection point P1 of two straight lines passing through the center of the first adhesion surface 37a and perpendicular to each other and four points P2 to P5 located on the straight line and separated from the intersection point by a predetermined distance, there are projections with flat top surfaces. This allows the holder 35 and the concave mirror 31 to adhere to each other with a predetermined clearance in at least the five points P1 to P5 and therefore makes a stable adhesive force between the holder 35 and the concave mirror 31.

Furthermore, resin molding for the holder 35 may be with a single mold or with a combination of molds. In the case of molding with a combination of molds, it is preferable to set seam joints of the molds so as to prevent burr extending upward (in the direction in which the concave mirror 31 is disposed) around the first to the fifth adhesion surfaces 37a to 37e of the holder 35.

### (Method of assembling the mirror unit)

Next, a method of assembling the mirror unit 30 is explained.

First, for example, a heated liquid adhesive agent is applied to the front surface (the surface opposed to the concave mirror 31) of each of the adhesion surfaces 37a to 37e. Then, the concave mirror 31 is assembled with the holder 35 having the adhesive agent applied thereto. At this point, the first positioning protruding portion 32a of the concave mirror 31 is located within the first positioning recessed portion 36a of the holder 35, the second positioning protruding portion 32b of the concave mirror 31 is located within the second positioning recessed portion 36b of the holder 35, and the third positioning protruding portion 32c of the concave mirror 31 is located within the third positioning recessed portion 36c of the holder 35. The applied adhesive agent is hardened when it reacts with for example moisture in the air. The hardening behavior is different depending on the type of adhesive agent selected. As illustrated in Fig. 10(a) to (c), the hardened adhesive agent 55 causes the concave mirror 31 and the holder 35 (to be exact, the first to the fifth adhesion surfaces 37a to 37e) to adhere to each other. Thus, assembling the mirror unit 30 is completed.

### (Effect and advantage)

According to the above-described embodiment, the following effect and advantage are produced.
(1) As illustrated in Fig. 4, the concave mirror 31 includes the first to the third positioning protruding portions 32a to 32c. As illustrated in Fig. 3, the holder 35 includes the first to the third positioning recessed portions 36a to 36c that correspond to the first to the third positioning protruding portions 32a to 32c, respectively. The first positioning recessed portion 36a is in contact with the first positioning protruding portion 32a to position the concave mirror 31 relative to the holder 35 in at least the X direction with regard to the XY-plane coordinates along the mirror surface 31a. The second positioning recessed portion 36b is in contact with the second positioning protruding portion 32b to position the concave mirror 31 relative to the holder 35 in at least the Y direction with regard to the XY-plane coordinates along the mirror surface 31a. The third positioning recessed portion 36c is in contact with the third positioning protruding portion 32c to position the concave mirror 31 relative to the holder 35 in the Z direction perpendicular to the XY plane. Thus, positioning the concave mirror 31 relative to the holder 35 in the XYZ directions at the three points prevents the concave mirror 31 from being misaligned with the holder 35. This prevents application of an unintentional external force from the holder 35 to the concave mirror 31 via the adhesive agent 55 due to a misalignment and prevents the occurrence of distortions in the mirror surface 31a.
(2) The first positioning recessed portion 36a is in contact with the first positioning protruding portion 32a to position the concave mirror 31 relative to the holder 35 in the X direction, the Y direction, and the Z direction. Furthermore, the second positioning recessed portion 36b is in contact with the second positioning protruding portion 32b to position the concave mirror 31 relative to the holder 35 in the Y direction and the Z direction. Furthermore, as described above, the third positioning recessed portion 36c is in contact with the third positioning protruding portion 32c to position the concave mirror 31 relative to the holder 35 in the Z direction. That is, the second positioning recessed portion 36b does not constrain the second positioning protruding portion 32b in the X direction, and the third positioning recessed portion 36c does not constrain the third positioning protruding portion 32c in the X direction and the Y direction. Thus, positioning the concave mirror 31 relative to the holder 35 with little constraint prevents application of an unintentional external force from the holder 35 to the concave mirror 31 via the adhesive agent 55. This may prevent distortions in the mirror surface 31a.
(3) As illustrated in Fig. 7, the second positioning recessed portion 36b has a recessed shape extending along the virtual connection line L connecting the first positioning recessed portion 36a and the second positioning recessed portion 36b. Typically, the entire holder 35 is formed of resin, and therefore it has low form accuracy as compared with the concave mirror 31. According to the present embodiment, the second positioning protruding portion 32b is located within the second positioning recessed portion 36b when, for example, the holder 35 has a shape error (particularly, a shape error in the X direction). Thus, it is further ensured that the concave mirror 31 is supported by the holder 35.
   Furthermore, as illustrated in Fig. 9(b), the third positioning recessed portion 36c includes the bottom surface 36c1, which is an example of a contact surface, with which the end of the first positioning protruding portion 32a is in contact. For example, the bottom surface 36c1 extends along the XY plane and has a size larger than that of the first positioning recessed portion 36a. This allows the third positioning protruding portion 32c to be in contact with the bottom surface 36c1 of the third positioning recessed portion 36c regardless of a shape error of the holder 35 in the X direction and the Y direction. This further ensures that the concave mirror 31 is supported by the holder 35.
(4) As illustrated in Fig. 3, the first positioning recessed portion 36a is provided at the first end 35a, in the X direction, of the holder 35, and the second positioning recessed portion 36b and the third positioning recessed portion 36c are provided at the second end 35b, which is the opposite side of the first end 35a, and are separated from each other in the Y direction. By thus disposing the first to the third positioning recessed portions 36a to 36c as apart from one another as possible, the concave mirror 31 may be supported by the holder 35 with higher accuracy.
(5) As illustrated in Fig. 3, the holder 35 includes the first to the fifth adhesion surfaces 37a to 37e that are opposed to the back surface of the concave mirror 31, at the opposite side of the mirror surface 31a, with a certain clearance. As illustrated in Fig. 10(a) to (c), the gap between the first to the fifth adhesion surfaces 37a to 37e and the back surface of the concave mirror 31 is filled with the adhesive agent 55. This prevents a misalignment between the concave mirror 31 and the holder 35 when the concave mirror 31 and the holder 35 are attached to each other.
   Furthermore, the first to the fifth adhesion surfaces 37a to 37e are evenly disposed on the back surface of the concave mirror 31. This enables a balanced application of force from the holder 35 to the concave mirror 31 via the adhesive agent 55. Thus, an application of force from the holder 35 to the concave mirror 31 resulting in a distortion in the mirror surface 31a of the concave mirror 31 is prevented.
   Furthermore, by using, for example, an adhesive agent that is liquid during application, the adhesive agent is deformed as appropriate by being sandwiched between the first to the fifth adhesion surfaces 37a to 37e and the back surface of the concave mirror 31. Here, when a two-sided adhesive tape is used as in the above-described Patent Literature 1, there is a possibility that the concave mirror is misaligned with the holder depending on the thickness of the two-sided adhesive tape, the surface roughness of the concave mirror or the holder at the area where the two-sided adhesive tape is attached, or the like. In this aspect, according to the present embodiment, as the adhesive agent flows along the above-described clearance, misalignment of the concave mirror 31 as in the above-described Patent Literature 1 is prevented.
(6) As illustrated in Fig. 2, the mirror unit 30 according to the present embodiment is applied to the display device 100, and it reflects and enlarges the display light L. Therefore, even a small distortion occurring in the concave mirror 31 of the mirror unit 30 may cause a large distortion in a virtual image. For this reason, the mirror surface of a mirror unit applied to particularly a display device is required to have high form accuracy. In this aspect, according to the present embodiment, distortions in the mirror surface 31a are prevented as described above; thus, it is preferable that the mirror unit 30 is applied to the display device 100.
(7) The mirror unit 30 according to the present embodiment includes the mirror 31 including the mirror surface 31a that reflects light; and the holder 35 that adheres to the mirror 31 and supports the mirror 31, and the adhesion surfaces 37a to 37e of the holder 35 adhering to the mirror 31 includes the uneven groove 370.
   This configuration enables large front surfaces of the adhesion surfaces 37a to 37e; therefore, the holder 35 may be fixedly attached to the mirror 31, and the mirror 31 is less likely to be separated from the holder 35.
(8) Furthermore, the uneven groove 370 extends in a direction perpendicular to the longitudinal direction of the holder 35.
   This configuration improves the power of endurance against shear stress applied to the adhesion surface 37a when the mirror unit 30 is placed in a high temperature environment so that the mirror 31 is less likely to be separated from the holder 35.
(9) Furthermore, the uneven groove 370 has protrusions at the predetermined areas P1 to P5 that are formed of the intersection point P1 of the two straight lines passing through the center of each of the adhesion surfaces 37a to 37e and perpendicular to each other and the four points P2 to P5 located on the straight line and separated from the intersection point by a predetermined distance.
   This configuration allows the holder 35 and the mirror 31 to adhere to each other with a predetermined clearance in at least the five points P1 to P5, and therefore the mirror unit 30 with a stable adhesive force may be provided.
(10) Furthermore, the adhesion surfaces 37a to 37e include the protruding frame portion 373 surrounding the uneven groove 370.

This configuration allows the recessed portion 371 surrounded by the frame portion 373 to serve as a container that contains an adhesive agent before it gets hardened; the adhesive agent remains on the adhesion surfaces 37a to 37e before it gets hardened without being leaked, and therefore it is ensured that the mirror 31 is attached to the holder 35.

### (Modification)

Furthermore, the above-described embodiment may be implemented in the following embodiment that is modified as needed.

The configuration of the display device 100 in the above-described embodiment is alterable as needed. For example, the reflective mirror member 20 may be omitted, and the display light L from the display unit 10 may be directly emitted to the mirror unit 30. Furthermore, the motor 41 and the converting mechanism 42 may be omitted. In this case, as the mirror unit 30 is fixedly installed in the chassis 60, the two rotary shaft portions 39a, 39b and the support portion 38 in the mirror unit 30 may be omitted.

According to the above-described embodiment, the first positioning protruding portion 32a is positioned in the center in the lateral direction of the concave mirror 31; however, it may be positioned at a corner of the concave mirror 31, for example, the corner corresponding to the fourth adhesion surface 37d or the fifth adhesion surface 37e of the holder 35. Accordingly, the position of the first positioning recessed portion 36a of the holder 35 needs to be also changed.

Furthermore, the positions of the first to the third positioning recessed portions 36a to 36c of the holder 35 may be switched as needed. Accordingly, the positions of the first to the third positioning protruding portions 32a to 32c of the concave mirror 31 may be also switched.

Furthermore, there may be a larger number of positioning recessed portions of the holder and positioning protruding portions of the concave mirror. For example, separately from the second positioning recessed portion 36b, a fourth positioning recessed portion having the same shape as that of the second positioning recessed portion 36b may be formed at a position along the connection line L. In this case, the concave mirror 31 is provided with a new fourth positioning protruding portion that corresponds to the fourth positioning recessed portion. In the same manner, a new positioning recessed portion and a new positioning protruding portion having the same shapes as those of the first positioning protruding portion 32a and the first positioning recessed portion 36a may be provided, and a new positioning recessed portion and a new positioning protruding portion having the same shapes as those of the third positioning protruding portion 32c and the third positioning recessed portion 36c may be provided.

According to the above-described embodiment, the first to the third positioning recessed portions 36a to 36c are formed on the holder 35, and the first to the third positioning protruding portions 32a to 32c are formed on the concave mirror 31. However, conversely, first to third positioning protruding portions may be formed on the holder 35, and first to third positioning recessed portions may be formed on the concave mirror 31.

The shapes of the first to the third positioning recessed portions 36a to 36c of the holder 35 may be changed as needed. For example, all of the positioning recessed portions may have the same shape as that of the first positioning recessed portion 36a. Even with this configuration, at least (1) in the above-described effect and advantage may be produced.

Furthermore, the first positioning recessed portion 36a may be formed to be a recess extending in the Y direction or a direction perpendicular to the connection line L. With this configuration, the first positioning recessed portion 36a is in contact with the first positioning protruding portion 32a to position the concave mirror 31 relative to the holder 35 in the X direction and the Z direction. Furthermore, although the first positioning recessed portion 36a is formed to be conical, it may be formed to be cylindrical. In this case, the concave mirror 31 is not secured in position in the Z direction by the first positioning recessed portion and the first positioning protruding portion. In the same aspect, the second positioning recessed portion 36b may be formed to have not a V shape but, for example, a U shape or a recessed shape. Moreover, the first positioning recessed portion and the second positioning recessed portion may penetrate the holder 35 in the thickness direction.

According to the above-described embodiment, the first to the third positioning protruding portions 32a to 32c are formed to be cylindrical with the spherical end; however, this is not a limitation, and it may be formed to have, for example, a typical cylindrical shape or a semispherical shape.

According to the above-described embodiment, for example, a solid adhesive of a thermoreversible resin component is used as an adhesive agent; however, a two-sided adhesive tape may be used as an adhesive agent.

According to the above-described embodiment, the concave mirror 31 is used as a mirror; however, any mirror, such as a convex mirror or a flat mirror, may be used.

According to the above-described embodiment, the display device according to the present invention is applied to a vehicle-mounted head-up display device; however, it is applicable to a head-up display device installed in not only a vehicle but also a machine such as an airplane or a vessel. Furthermore, the projecting member may be not only a front windshield but also a dedicated combiner. Furthermore, the display device according to the present invention is applicable to not only a head-up display device but also a display device such as a projector used indoors or outdoors. Furthermore, the projecting member may be not only translucent but also a reflective screen, or the like. Moreover, for example, the display device according to the present invention may be installed in a glasses-type wearable terminal.

Furthermore, although the mirror unit 30 is applied to the display device 100 according to the above-described embodiment, it is applicable to other optical products.

### DESCRIPTION OF REFERENCE NUMERALS

- 1: Viewer
- 10: Display unit
- 11: Light source
- 12: Liquid crystal display panel
- 13: Light source board
- 14: Diffusion chassis
- 15: Heatsink
- 20: Reflective mirror member
- 30: Mirror unit
- 31: Concave mirror
- 31a: Mirror surface
- 31b: First end
- 31c: Second end
- 32a to 32c: First to third positioning protruding portions
- 35: Holder
- 35a: First end
- 35b: Second end
- 36a to 36c: First to third positioning recessed portion
- 36c1: Bottom surface
- 36c2: Side surface
- 37a to 37e: First to fifth adhesion surface
- 370: Uneven groove
- 371: Recessed portion
- 372: Protruding portion
- 373: Frame portion
- P1 to P5: Predetermined area
- 38: Support portion
- 55: Adhesive agent
- 60: Chassis
- 100: Display device

## Claims

1. A mirror unit comprising:
a mirror including a mirror surface configured to reflect light; and
a holder configured to support the mirror, the holder adhering to the mirror, wherein
an adhesion surface of the holder adhering to the mirror includes an uneven groove.

2. The mirror unit according to claim 1, wherein the uneven groove extends in a direction perpendicular to a longitudinal direction of the holder.

3. The mirror unit according to claim 1 or 2, wherein the uneven groove has protrusions at an intersection point of two straight lines passing through a center of the adhesion surface and perpendicular to each other and four points located on the straight line and separated from the intersection point by a predetermined distance.

4. The mirror unit according to any one of claims 1 to 3, wherein the adhesion surface has a protruding frame portion surrounding the uneven groove.

5. The mirror unit according to any one of claims 1 to 4, wherein the holder includes
a first holder-side positioning portion that is configured to be in contact with the first mirror-side positioning portion to position the mirror relative to the holder in at least an X direction with regard to XY-plane coordinates along the mirror surface;
a second holder-side positioning portion that is configured to be in contact with the second mirror-side positioning portion to position the mirror relative to the holder in at least a Y direction with regard to the XY-plane coordinates; and
a third holder-side positioning portion that is configured to be in contact with the third mirror-side positioning portion to position the mirror relative to the holder in at least a Z direction perpendicular to the XY plane.
